# EUROPEAN PATENT SPECIFICATION

(11) **EP 4 526 159 B1**
(45) Date of publication and mention of the grant of the patent: **15.04.2026**
(21) Application number: 23726633.3
(22) Date of filing: 08.05.2023
(51) Int. Cl.: B60R 16/02, B60L 53/10, B60L 53/16, B60L 53/18, B65H 75/36

(54) **RECHARGING UNIT OF AN ELECTRICALLY-POWERED MOTOR-VEHICLE**
AUFLADEEINHEIT EINES ELEKTRISCH ANGETRIEBENEN KRAFTFAHRZEUGS
UNITÉ DE RECHARGE D'UN VÉHICULE À MOTEUR À PROPULSION ÉLECTRIQUE

(30) Priority: 19.05.2022 IT 202200010385
(43) Date of publication of application: 26.03.2025
(73) Proprietor: Stellantis Europe S.p.A., 10135 Torino (TO) (IT)
(72) Inventor: BIANCO, Leonardo, 10135 Torino (IT); BRUNO, Salvatore, 10135 Torino (IT); CARBONE, Gaetano, 10135 Torino (IT); DELMONTE, Maurizio, 10135 Torino (IT); ESPOSITO, Giovanni, 10135 Torino (IT); MASTRANTUONO, Guiscardo, 10135 Torino (IT); ROMANIELLO, Fabiana, 10135 Torino (IT)
(74) Representative: Buzzi, Notaro & Antonielli d'Oulx S.p.A.
(86) International application number: PCT/IB2023/054740
(87) International publication number: WO 2023/223139

(56) References cited:
- EP-A1- 2 506 378
- EP-A1- 2 690 735
- WO-A1-2011/064855
- DE-A1- 102009 016 895
- DE-A1- 102020 131 712
- JP-A- 2009 136 108
- US-A- 5 855 262
- US-A1- 2011 139 521

## Description

### Field of the invention

This invention relates to a recharging unit for one or more batteries of an electrically-powered motor-vehicle, permanently arranged on board the motor-vehicle.

### Prior art

As known in the sector in question, the recharging of a battery pack of an electrically-powered vehicle takes place by means of electrical connectors configured to ensure safe and effective recharging.

Depending on the recharging equipment, the connectors can be of the traditional type, for example sockets for domestic use, or connectors for industrial use. Usually, the first solution is used in areas with access reserved for the vehicle owner, while the second solution is preferable in the public sphere.

One of the most widespread solutions concerns the arrangement of recharging columns which include within them an electrical connection cable and a connector provided with electrical terminals to be connected to a corresponding connector element on board the motor-vehicle.

Document US 2011/139521 discloses a recharging unit of one or more batteries of an electrically-powered motor-vehicle wherein said recharging unit comprises an electrical connector carried by a charging cable, provided for connection to an external electrical socket, a hollow support and containment body configured to house said charging cable and said electrical connector, wherein said hollow support and containment body defines a cavity, wherein said proximal portion has an opening for enabling manually picking-up said electrical connector.

This invention starts from the desire to create a solution for recharging an electric or hybrid vehicle which is relatively simple to implement and low-cost, compatible with the overall dimensions and installation spaces available on board the motor-vehicle.

### Object of the invention

The object of this invention is to provide a recharging unit of the type indicated at the beginning of the present disclosure, having a relatively simple and low-cost structure, while allowing recharging operations to be performed intuitively and effectively.

A further object of the invention is to provide a modular recharging unit, adaptable for different types of recharging connectors.

A further object of the invention is to provide a unit of the type indicated above, compatible with the overall dimensions and installation spaces available on board the motor-vehicle, for example at the engine compartment.

### Summary of the invention

In view of achieving one or more of the said objects, the invention relates to a recharging unit for one or more batteries of an electrically-powered motor-vehicle, permanently arranged on board said motor-vehicle, wherein said recharging unit comprises:
- an electrical connector carried by a recharging cable, provided for connection to an external electrical socket,
- a hollow support and containment body configured to house said recharging cable and said electrical connector,
- wherein said hollow support and containment body defines a cavity, a proximal portion, and a distal portion, wherein said proximal portion has an opening for enabling manually picking-up said electrical connector,
- a further electrical connector supported by said hollow support and containment body at said distal portion, wherein said further electrical connector is connected to said recharging cable at an end opposite to said electrical connector and is arranged to receive a corresponding connector element for connection to respective electronic components for managing the motor-vehicle batteries.

Further features of the invention are indicated in the attached dependent claims.

### Brief description of the figures

Further features and advantages of the invention will emerge from the following description with reference to the attached drawings, provided purely by way of non-limiting example, in which:
- figures 1A, 1B are respectively a general perspective view of a motor-vehicle and a perspective view, on an enlarged scale, of an area of the motor-vehicle at which a recharging unit is mounted according to a preferred embodiment,
- figures 2, 3 are respectively a perspective view and a sectional view of the recharging unit according to a preferred embodiment,

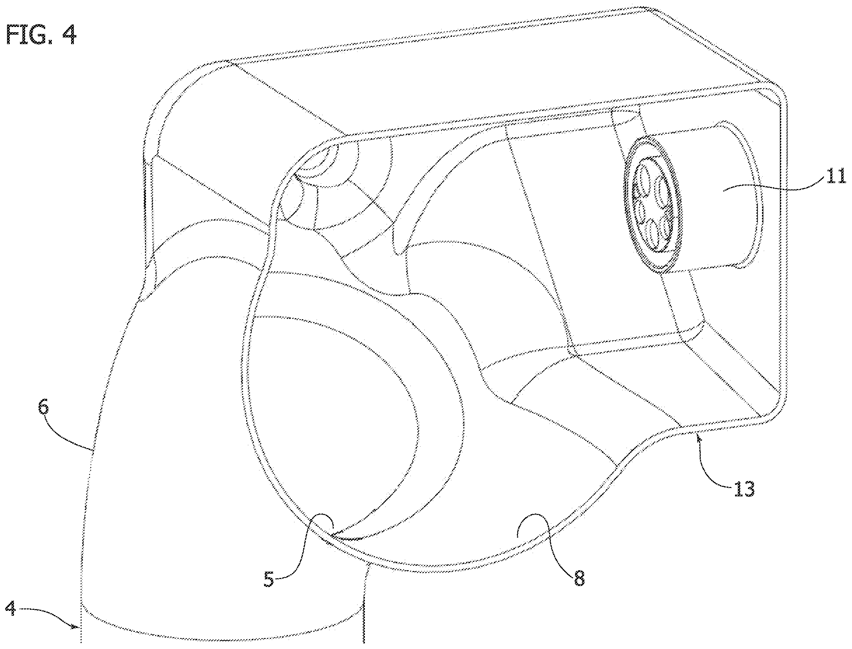

- figures 4, 5 are perspective views, on an enlarged scale, illustrating various components illustrated in figures 2, 3,
- figure 6 is a further perspective view of the recharging unit according to a preferred embodiment,
- figure 7 is a view, on enlarged scale, of some components illustrated in the previous figure, and
- figure 8 is an exploded perspective view illustrating further features of the invention.

### Detailed description of several embodiments

Various specific details are illustrated in the following description aimed at an in-depth understanding of examples of one or more embodiments. Embodiments may be made without one or more of the specific details, or with other methods, components, materials, etc. In other cases, known structures, materials or operations are not shown or described in detail to avoid obscuring various aspects of the embodiments. Reference to "an embodiment" or "one embodiment" in the framework of the present description is intended to indicate that a particular configuration, structure, or feature described in connection with the embodiment is included in at least one embodiment. Thus, phrases such as "in an embodiment" or "in one embodiment," that may be present in one or more points of the present description do not necessarily refer to one and the same embodiment. Moreover, particular conformations, structures, or features may be combined in any adequate way in one or more embodiments and/or associated with the embodiments in a manner other than as illustrated herein, so that for example a feature, exemplified herein in relation to a figure, can be applied to one or more embodiments exemplified in a different figure.

The headings/references used herein are provided merely for convenience and hence do not define the extent of protection or the scope of the embodiments.

In the accompanying drawings, the number 1 indicates as a whole a recharging unit for one or more batteries of an electric or hybrid motor-vehicle V, permanently arranged on board the motor-vehicle V.

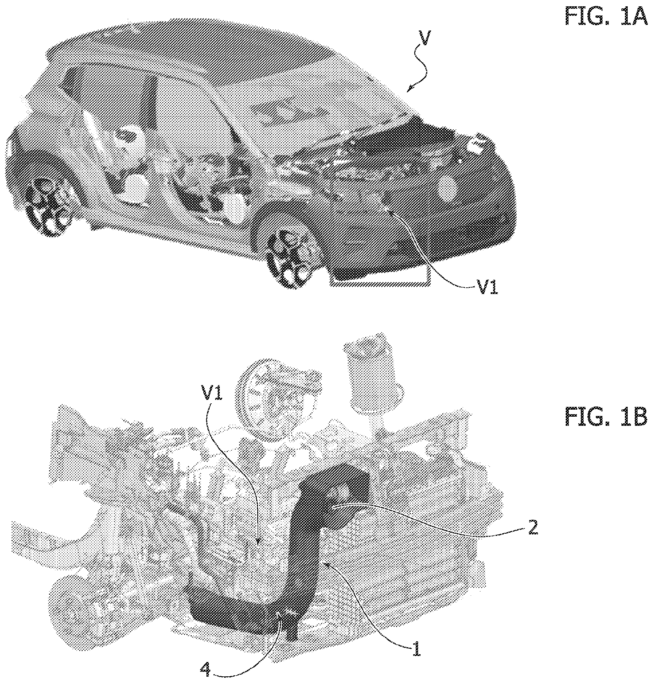

Figures 1A, 1B are respectively a general perspective view of a motor-vehicle V and a perspective view, on an enlarged scale, of an area of the motor-vehicle V at which the recharging unit 1 is mounted. According to a preferred embodiment, the recharging unit 1 is mounted on board the motor-vehicle V at a front portion V1 substantially corresponding to a lateral portion of the engine compartment. However, it should be noted that the unit 1 can be installed in other positions, for example in a rear area of the vehicle, in the load compartment, near a rear fog light element, in a side area of the vehicle, etc.

The recharging unit 1 can be used to recharge various types of battery cells and/or modules, constituting battery packs for powering a purely electric or hybrid propulsion system.

According to this invention, the recharging unit 1 comprises a hollow support and containment body 4 configured to internally house a recharging cable 3 on which an electrical connector 2 is provided for connection to an electrical socket outside the motor-vehicle V. It should be noted that the electrical connector 2 can be of a different type to that schematically illustrated, depending on the respective coupling with an external recharging socket.

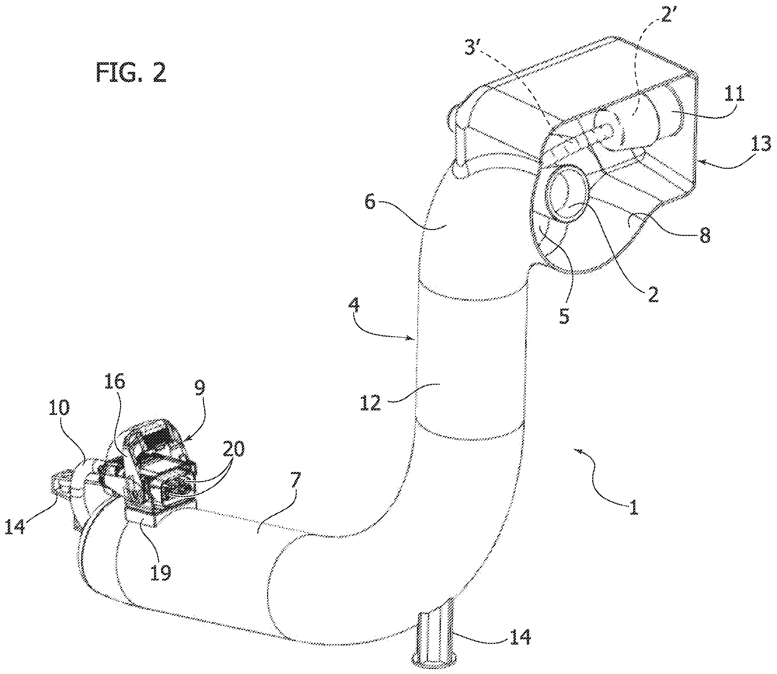

According to the embodiment illustrated, particularly in figure 2, the support and containment body 4 is substantially shaped like a tube, defining a cavity 5 within which are arranged: the recharging cable 3, a distal portion 7, and a proximal portion 6 which has an opening 8 for enabling manually picking-up the electric connector 2 to carry out the connection to the external electric socket (not shown).

According to the illustrated embodiment, the support and containment body 4 has a curved shape, in which a substantially vertical intermediate portion 12 is provided between the proximal portion 6 and the distal portion 7 (with reference to the configuration installed on board the motor-vehicle), so as to provide a substantially S-shaped body 4. The distal portion 7 defines a substantially horizontal section and the proximal portion 6 comprises a head portion 13 on which the said opening 8 is obtained, from which it is possible to pick up the electrical connector 2.

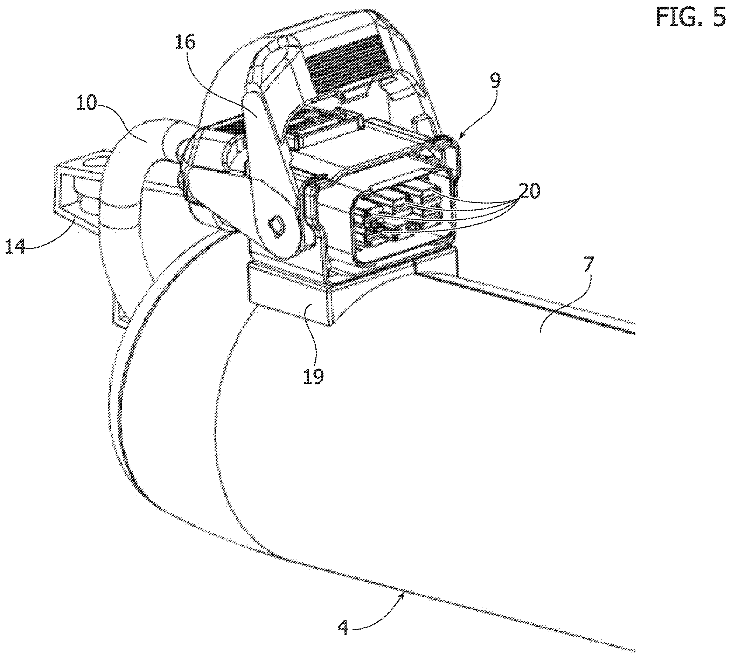

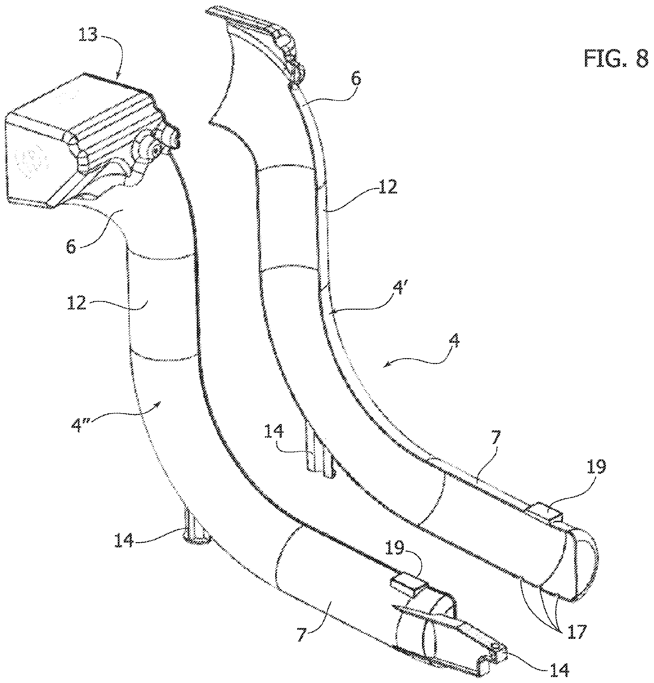

In one or more embodiments, as illustrated in Figure 8, the hollow support and containment body 4 is formed by two half-shells 4', 4", for example made of plastic material, which can be coupled together with mutual fixing means, so as to form the tube-shaped body and the cavity 5 within which the recharge cable 3 is arranged. Preferably, the support and containment body 4 has a circular section. With reference to figure 5, it should be noted that the support and containment body 4 comprises mounting portions 14 arranged to secure in place the support and containment body 4 to the chassis of the motor-vehicle. For example, the mounting portions comprise connection elements in the vicinity of the intermediate portion 12 and of the distal portion 7, provided for connection to a lower portion of the chassis of the motor-vehicle V, by means of mutual fixing means.

The recharging unit 1 also comprises a further electrical connector 9 connected to the recharging cable 3 at an end 10 opposite to the electrical connector 2 facing the opening 8 for the manual pick-up. The said additional electrical connector 9 is arranged to receive a corresponding connector element (not shown) for connection to respective electronic components for managing the batteries mounted on the motor-vehicle V. As illustrated in the enlarged scale view of figure 5, the said additional electrical connector 9 is externally supported by said hollow support and containment body 4 at the distal portion 7. More specifically, a securing seat 19 is applied to the external wall of the body 4, to receive the said further electrical connector 9. According to the illustrated example, the further electrical connector 9 has a plurality of electrical terminals 20 provided for connection with respective terminals of the corresponding connector element. The further connector 9 also comprises a mechanical arm 16 arranged to be moved with a rotation of approximately 90° to achieve the mechanical coupling with the corresponding connector element (not shown). It should be noted that the electric cable 3 protrudes from the containment body 4 at an end wall of the body 4, with a substantially circular trajectory to reach the further electric connector 9 mounted above and outside the body 4.

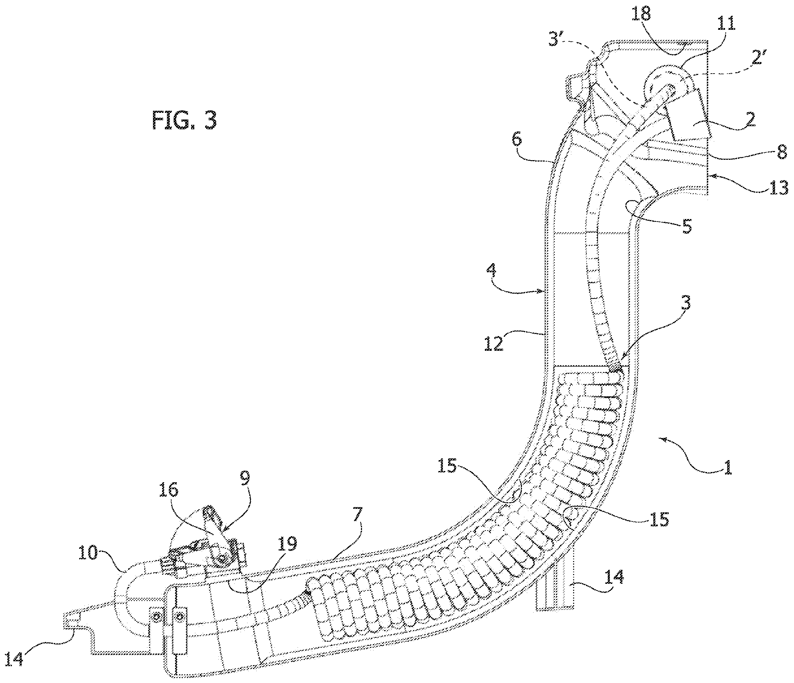

According to a further feature illustrated in figure 3, the support and containment body 4 has an internal coating layer 15 applied along the internal surface of the body 4, so as to create a layer interposed between the recharging cable 3 and the material of which the body 4 is made. Thanks to this feature, it is possible to drastically reduce any noise during the movement of the motor-vehicle (due to the contact of the internal wall of the body 4 with the cable 3), as well as to reduce the friction (again for the contact of the internal wall of the body 4 with the cable 3) during the handling of the recharging cable 3 for the manual pick-up of the connector 2. According to an exemplary embodiment, the internal coating layer 15 is made of a material for acoustic insulation, for example of the elastomer type.

As illustrated in figure 2, the recharging cable 3 is a spiral cable providing, in a rest position, a spiral pattern between the proximal portion 6 and the distal portion 7, i.e. between the two connectors 2,9, in which the spiral cable has a spiral pattern substantially coaxial with respect to the support and containment body 4. In one or more embodiments, the overall length of the recharging cable 3 is between 3 and 7 metres. Thanks to the arrangement of the spiral shape of the cable 3 and of the containment body 4, it is possible to arrange electric cables of significant length on board the motor-vehicle in a compact and safe way. As illustrated in figure 3, the recharging cable 3 has, at the ends of the spiral portion, a respective substantially straight portion connected to the respective connector 2, 9.

According to a feature of the invention, a receiving seat 11 is formed within the head portion 13, arranged to receive and secure the electrical connector 2 in a rest position, when the connector 2 is not used to carry out a recharging operation. This receiving seat 11 is configured in such a way that the connector 2 is housed on the seat 11, avoiding the making of noise in the passenger compartment due to movements of the recharging cable 3 and of the connector 2, for example, while the motor-vehicle is in motion. The reference numbers 2', 3' respectively indicate the cable and the connector in the rest position on the receiving seat 11. It should be noted that the receiving seat 11 is substantially shaped to reproduce the shape of the electrical connector 2 in negative. In the embodiment illustrated in the drawings, the receiving seat 11 is arranged inside the head portion 13, protruding from a side wall substantially perpendicular to the opening 8.

In operation, a user who has to carry out a recharging operation proceeds with the opening of a mobile door (not shown), applied at the opening 8, so as to be able to access the recharging cable 3 and the connector 2 present inside the support and containment body 4. The operator proceeds with the manual pick-up of the connector 2 from the seat 11, to carry out the connection to an external recharging socket, exploiting the spiral shape and the overall length of the recharging cable 3.

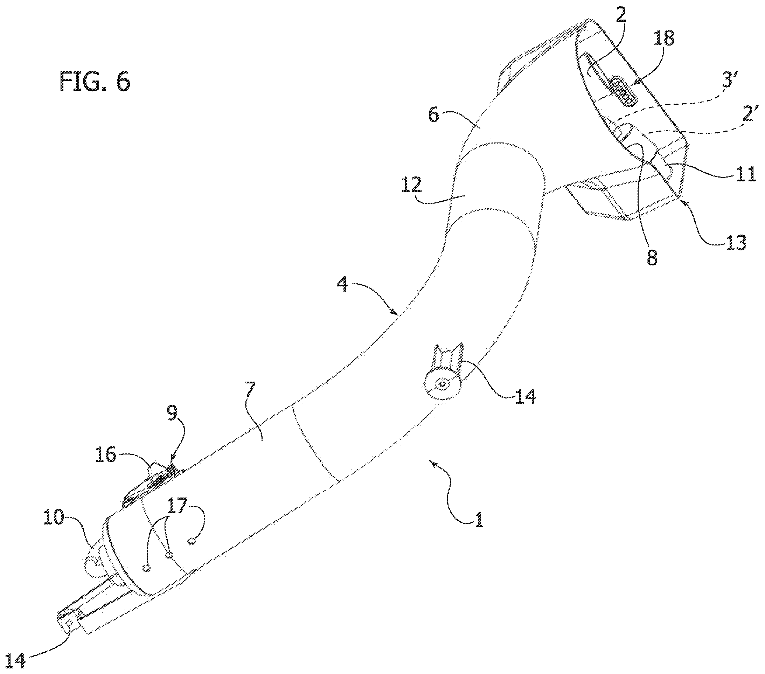

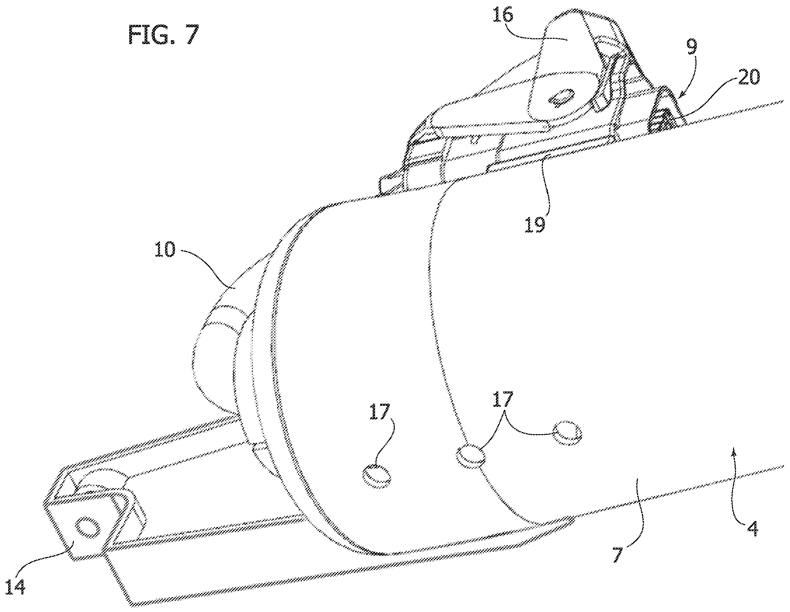

According to a further feature illustrated in figures 6, 7, the support and containment body 4 has at least one drainage opening 17 configured to avoid storage of aqueous residues within the body 4, which could damage the recharging cable 3 and/ or the connector 2. This feature is to be considered particularly advantageous given that, during use, the cable 3 and the connector 2 can accumulate humidity from the external environment in which the recharging socket to be connected to the connector 2 is arranged. According in the illustrated embodiment, at a lower area (with reference to the installed configuration) of the distal portion 7, there are a plurality of drainage openings 17 spaced along a horizontal section of the body 4. These drainage openings 17 can be also made of a material suitable for allowing the passage of water/humidity only out of the body 4 and not in.

According to a further feature illustrated in figure 6, at the head portion 13 there are a plurality of lighting sources 18, for example LEDs, to illuminate the pick-up area of the electrical connector 2 and/or represent the current state of recharging of the vehicle batteries (for example, with a succession of LEDs which can emit a light source of different colors - green, yellow, red -). According to a preferred illustrated example, the light sources 18 are applied within the head portion 13 at an upper wall, so as to emit a light source in the direction of the electrical connector 2. Naturally, the configuration of the light source shown in the drawings is provided here by way of example only.

Naturally, without prejudice to the principle of the invention, the details of construction and the embodiments may vary widely with respect to what has been described and illustrated purely by way of example, without thereby departing from the scope of this invention.

## Claims

1. Recharging unit (1) for one or more batteries of an electrically-powered motor-vehicle (V), permanently arranged on board said motor-vehicle (V), wherein said recharging unit (1) comprises:
- an electrical connector (2) carried by a recharging cable (3), provided for connection to an external electrical socket,
- a hollow support and containment body (4) configured to house said recharging cable (3) and said electrical connector (2),
- wherein said hollow support and containment body (4) defines a cavity (5), a proximal portion (6), and a distal portion (7), wherein said proximal portion (6) has an opening (8) for enabling manually picking-up said electrical connector (2),
- a further electrical connector (9) supported by said hollow support and containment body (4) at said distal portion (7), wherein said further electrical connector (9) is connected to said recharging cable (3) at an end (10) opposite to said electrical connector (2) and is arranged to receive a corresponding connector element for connection to respective electronic components for managing the motor-vehicle (V) batteries.

2. Recharging unit (1) according to claim 1, wherein the support and containment body (4) defines a tube-shaped body substantially with "S" shape.

3. Recharging unit (1) according to any of the previous claims, wherein the support and containment body (4) is formed by two half-shells (4', 4") which can be coupled together with mutual fixing means.

4. Recharging unit (1) according to any of the previous claims, wherein said support and containment body (4) comprises an internal coating layer (15) applied along the internal surface of the body (4), so as to create a layer of acoustic insulation and friction reduction, placed between the recharging cable (3) and the material forming the body (4).

5. Recharging unit (1) according to any of the previous claims, wherein the recharging cable (3) is a spiral cable providing, in a rest position, a spiral pattern substantially coaxial with respect to the support and containment body (4).

6. Recharge unit (1) according to any of the previous claims, comprising a receiving seat (11) arranged to receive and secure the electrical connector (2) in a rest position, when the connector (2) is not used to carry out a recharging operation, wherein said receiving seat (11) is arranged in proximity of the opening (8), and is substantially shaped to reproduce the shape of the electrical connector (2) in negative.

7. Recharging unit (1) according to any of the previous claims, wherein said further electrical connector (9) is supported externally by said hollow support and containment body (4) at the distal portion (7), wherein said further connector (9) comprises a mechanical arm (16) arranged to be moved in rotation to achieve the mechanical coupling with the corresponding connector element.

8. Recharging unit (1) according to any of the previous claims, wherein the support and containment body (4) has at least one drainage opening (17) configured to avoid storage of aqueous residues within the body (4), wherein said at least one drainage opening (17) is formed at a lower area of the distal portion (7).

9. Recharge unit (1) according to any of the previous claims, comprising a plurality of lighting sources (18), for example LEDs, to illuminate the pick-up area of the electrical connector (2) and/or represent the current recharging state of the motor-vehicle batteries.

10. Electrically-powered motor-vehicle (V) comprising a recharging unit (1) for one or more batteries, permanently arranged on board said motor-vehicle (V), wherein said recharging unit (1) comprises:
- an electrical connector (2) carried by a recharging cable (3), provided for connection to an external electrical socket,
- a hollow support and containment body (4) configured to house said recharging cable (3) and said electrical connector (2),
- wherein said hollow support and containment body (4) defines a cavity (5), a proximal portion (6), and a distal portion (7), wherein said proximal portion (6) has an opening (8) for enabling manually picking-up said electrical connector (2),
- a further electrical connector (9) supported by said hollow support and containment body (4) at said distal portion (7), wherein said further electrical connector (9) is connected to said recharging cable (3) at an end (10) opposite to said electrical connector (2) and is arranged to receive a corresponding connector element for connection to respective electronic components for managing the motor-vehicle (V) batteries.

## Patentansprüche

1. Ladeeinheit (1) für eine oder mehrere Batterien eines elektrisch angetriebenen Kraftfahrzeugs (V), dauerhaft an Bord des genannten Kraftfahrzeugs (V) angeordnet, wobei die genannte Ladeeinheit (1) umfasst:
- einen elektrischen Stecker (2), der von einem Ladekabel (3) getragen wird und für den Anschluss an eine externe elektrische Steckdose vorgesehen ist,
- einen hohlen Träger- und Aufnahmekörper (4), der konfiguriert ist, um das genannte Ladekabel (3) und den genannten elektrischen Stecker (2) aufzunehmen,
- wobei der genannte hohle Träger- und Aufnahmekörper (4) einen Hohlraum (5), einen proximalen Abschnitt (6) und einen distalen Abschnitt (7) definiert, wobei der genannte proximale Abschnitt (6) eine Öffnung (8) zum Ermöglichen des manuellen Aufnehmens des genannten elektrischen Steckers (2) aufweist,
- einen weiteren elektrischen Stecker (9), der von dem genannten hohlen Träger- und Aufnahmekörper (4) an dem genannten distalen Abschnitt (7) getragen wird, wobei der genannte weitere elektrische Stecker (9) an einem Ende (10) gegenüber dem genannten elektrischen Stecker (2) mit dem genannten Ladekabel (3) verbunden ist und angeordnet ist, um ein entsprechendes Verbindungselement für den Anschluss an jeweilige elektronische Komponenten zur Verwaltung der Batterien des Kraftfahrzeugs (V) aufzunehmen.

2. Ladeeinheit (1) nach Anspruch 1, wobei der Träger- und Aufnahmekörper (4) einen im Wesentlichen "S"-förmigen rohrförmigen Körper definiert.

3. Ladeeinheit (1) nach einem der vorhergehenden Ansprüche, wobei der Träger- und Aufnahmekörper (4) aus zwei Halbschalen (4', 4") gebildet ist, die mit gegenseitigen Befestigungsmitteln miteinander gekoppelt werden können.

4. Ladeeinheit (1) nach einem der vorhergehenden Ansprüche, wobei der genannte Träger- und Aufnahmekörper (4) eine innere Beschichtungsschicht (15) umfasst, die entlang der Innenfläche des Körpers (4) aufgebracht ist, um so eine Schicht aus Schalldämmung und Reibungsreduzierung zu schaffen, die zwischen dem Ladekabel (3) und dem Material, das den Körper (4) bildet, angeordnet ist.

5. Ladeeinheit (1) nach einem der vorhergehenden Ansprüche, wobei das Ladekabel (3) ein spiralförmiges Kabel ist, das in einer Ruheposition ein im Wesentlichen koaxial in Bezug auf den Träger- und Aufnahmekörper (4) verlaufendes Spiralenmuster bereitstellt.

6. Ladeeinheit (1) nach einem der vorhergehenden Ansprüche, umfassend einen Aufnahmesitz (11), der angeordnet ist, um den elektrischen Stecker (2) in einer Ruheposition aufzunehmen und zu sichern, wenn der Stecker (2) nicht verwendet wird, um einen Ladevorgang durchzuführen, wobei der genannte Aufnahmesitz (11) in der Nähe der Öffnung (8) angeordnet und im Wesentlichen so geformt ist, dass er die Form des elektrischen Steckers (2) negativ wiedergibt.

7. Ladeeinheit (1) nach einem der vorhergehenden Ansprüche, wobei der genannte weitere elektrische Stecker (9) extern von dem genannten hohlen Träger- und Aufnahmekörper (4) an dem distalen Abschnitt (7) getragen wird, wobei der genannte weitere Stecker (9) einen mechanischen Arm (16) umfasst, der angeordnet ist, um in Rotation bewegt zu werden, um die mechanische Kopplung mit dem entsprechenden Verbindungselement zu erreichen.

8. Ladeeinheit (1) nach einem der vorhergehenden Ansprüche, wobei der Träger- und Aufnahmekörper (4) mindestens eine Entwässerungsöffnung (17) aufweist, die konfiguriert ist, um die Ansammlung von wässrigen Rückständen innerhalb des Körpers (4) zu vermeiden, wobei die genannte mindestens eine Entwässerungsöffnung (17) in einem unteren Bereich des distalen Abschnitts (7) ausgebildet ist.

9. Ladeeinheit (1) nach einem der vorhergehenden Ansprüche, umfassend eine Vielzahl von Lichtquellen (18), beispielsweise LEDs, um den Aufnahmebereich des elektrischen Steckers (2) zu beleuchten und/oder den aktuellen Ladezustand der Kraftfahrzeugbatterien darzustellen.

10. Elektrisch angetriebenes Kraftfahrzeug (V), umfassend eine Ladeeinheit (1) für eine oder mehrere Batterien, dauerhaft an Bord des genannten Kraftfahrzeugs (V) angeordnet, wobei die genannte Ladeeinheit (1) umfasst:
- einen elektrischen Stecker (2), der von einem Ladekabel (3) getragen wird und für den Anschluss an eine externe elektrische Steckdose vorgesehen ist,
- einen hohlen Träger- und Aufnahmekörper (4), der konfiguriert ist, um das genannte Ladekabel (3) und den genannten elektrischen Stecker (2) aufzunehmen,
- wobei der genannte hohle Träger- und Aufnahmekörper (4) einen Hohlraum (5), einen proximalen Abschnitt (6) und einen distalen Abschnitt (7) definiert, wobei der genannte proximale Abschnitt (6) eine Öffnung (8) zum Ermöglichen des manuellen Aufnehmens des genannten elektrischen Steckers (2) aufweist,
- einen weiteren elektrischen Stecker (9), der von dem genannten hohlen Träger- und Aufnahmekörper (4) an dem genannten distalen Abschnitt (7) getragen wird, wobei der genannte weitere elektrische Stecker (9) an einem Ende (10) gegenüber dem genannten elektrischen Stecker (2) mit dem genannten Ladekabel (3) verbunden ist und angeordnet ist, um ein entsprechendes Verbindungselement für den Anschluss an jeweilige elektronische Komponenten zur Verwaltung der Batterien des Kraftfahrzeugs (V) aufzunehmen.

## Revendications

1. Unité de recharge (1) pour une ou plusieurs batteries d'un véhicule à moteur électrique (V), disposée de manière permanente à bord dudit véhicule à moteur (V), dans laquelle ladite unité de recharge (1) comprend:
- un connecteur électrique (2) porté par un câble de recharge (3), prévu pour la connexion à une prise électrique externe,
- un corps de support et de confinement creux (4) configuré pour loger ledit câble de recharge (3) et ledit connecteur électrique (2),
- dans lequel ledit corps de support et de confinement creux (4) définit une cavité (5), une partie proximale (6) et une partie distale (7), dans lequel ladite partie proximale (6) présente une ouverture (8) pour permettre la saisie manuelle dudit connecteur électrique (2),
- un autre connecteur électrique (9) supporté par ledit corps de support et de confinement creux (4) au niveau de ladite partie distale (7), dans lequel ledit autre connecteur électrique (9) est connecté audit câble de recharge (3) à une extrémité (10) opposée audit connecteur électrique (2) et est agencé pour recevoir un élément de connecteur correspondant pour la connexion à des composants électroniques respectifs pour la gestion des batteries du véhicule à moteur (V).

2. Unité de recharge (1) selon la revendication 1, dans laquelle le corps de support et de confinement (4) définit un corps de forme tubulaire sensiblement en forme de "S".

3. Unité de recharge (1) selon l'une quelconque des revendications précédentes, dans laquelle le corps de support et de confinement (4) est formé par deux demi-coquilles (4', 4") qui peuvent être accouplées ensemble avec des moyens de fixation mutuels.

4. Unité de recharge (1) selon l'une quelconque des revendications précédentes, dans laquelle ledit corps de support et de confinement (4) comprend une couche de revêtement interne (15) appliquée le long de la surface interne du corps (4), de manière à créer une couche d'isolation acoustique et de réduction de frottement, placée entre le câble de recharge (3) et le matériau formant le corps (4).

5. Unité de recharge (1) selon l'une quelconque des revendications précédentes, dans laquelle le câble de recharge (3) est un câble spiralé fournissant, dans une position de repos, un motif spiral sensiblement coaxial par rapport au corps de support et de confinement (4).

6. Unité de recharge (1) selon l'une quelconque des revendications précédentes, comprenant un siège de réception (11) agencé pour recevoir et fixer le connecteur électrique (2) dans une position de repos, lorsque le connecteur (2) n'est pas utilisé pour effectuer une opération de recharge, dans lequel ledit siège de réception (11) est agencé à proximité de l'ouverture (8), et est sensiblement façonné pour reproduire en négatif la forme du connecteur électrique (2).

7. Unité de recharge (1) selon l'une quelconque des revendications précédentes, dans laquelle ledit autre connecteur électrique (9) est supporté extérieurement par ledit corps de support et de confinement creux (4) au niveau de la partie distale (7), dans lequel ledit autre connecteur (9) comprend un bras mécanique (16) agencé pour être déplacé en rotation pour réaliser l'accouplement mécanique avec l'élément de connecteur correspondant.

8. Unité de recharge (1) selon l'une quelconque des revendications précédentes, dans laquelle le corps de support et de confinement (4) présente au moins une ouverture de drainage (17) configurée pour éviter l'accumulation de résidus aqueux à l'intérieur du corps (4), dans laquelle ladite au moins une ouverture de drainage (17) est formée dans une zone inférieure de la partie distale (7).

9. Unité de recharge (1) selon l'une quelconque des revendications précédentes, comprenant une pluralité de sources d'éclairage (18), par exemple des LED, pour éclairer la zone de saisie du connecteur électrique (2) et/ou représenter l'état de recharge actuel des batteries du véhicule à moteur.

10. Véhicule à moteur électrique (V) comprenant une unité de recharge (1) pour une ou plusieurs batteries, disposée de manière permanente à bord dudit véhicule à moteur (V), dans laquelle ladite unité de recharge (1) comprend:
- un connecteur électrique (2) porté par un câble de recharge (3), prévu pour la connexion à une prise électrique externe,
- un corps de support et de confinement creux (4) configuré pour loger ledit câble de recharge (3) et ledit connecteur électrique (2),
- dans lequel ledit corps de support et de confinement creux (4) définit une cavité (5), une partie proximale (6) et une partie distale (7), dans lequel ladite partie proximale (6) présente une ouverture (8) pour permettre la saisie manuelle dudit connecteur électrique (2),
- un autre connecteur électrique (9) supporté par ledit corps de support et de confinement creux (4) au niveau de ladite partie distale (7), dans lequel ledit autre connecteur électrique (9) est connecté audit câble de recharge (3) à une extrémité (10) opposée audit connecteur électrique (2) et est agencé pour recevoir un élément de connecteur correspondant pour la connexion à des composants électroniques respectifs pour la gestion des batteries du véhicule à moteur (V).
